# EUROPEAN PATENT SPECIFICATION

(11) **EP 1 147 387 B1**
(45) Date of publication and mention of the grant of the patent: **28.09.2005**
(21) Application number: 98959288.6
(22) Date of filing: 18.12.1998
(51) Int. Cl.: G01J 5/20

(54) **INFRARED BOLOMETER**
INFRAROTEMPFINDLICHES BOLOMETER
BOLOMETRE INFRAROUGE

(43) Date of publication of application: 24.10.2001
(73) Proprietor: Daewoo Electronics Corporation, Seoul (KR)
(72) Inventor: JU, Sang, Baek Video Research Center, Jung-Gu Seoul 100-095 (JP)
(74) Representative: Turi, Michael
(86) International application number: PCT/KR1998/000443
(87) International publication number: WO 2000/037905

(56) References cited:
- EP-A2- 0 354 396
- PATENT ABSTRACTS OF JAPAN & JP 10 111 178 A (NIKON CORP) 28 April 1998

## Description

### TECHNICAL FIELD OF THE INVENTION

The present invention relates to an infrared bolometer; and, more particularly, to the infrared bolometer capable of structurally compensating for a slope of a post.

### BACKGROUND ART

A radiation detector is a device that produces an output signal which is a function of the amount of radiation that is incident upon an active region of the detector. Infra-red detectors are those detectors which are sensitive to radiation in the infra-red region of the electromagnetic spectrum. There are two types of infra-red detectors, thermal detectors including bolometers and photon detectors.

The photon detectors function based upon the number of photons that are incident upon and interact with electrons in a transducer region of the detector. The photon detectors, since they function based on direct interactions between electrons and photons, are highly sensitive and have a high response speed compared to the bolometers. However, they have a shortcoming in that the photon detectors operate well only at low temperatures, necessitating a need to an incorporate therein an additional cooling system.

The bolometers function, on the other hand, based upon a change in the temperature of the transducer region of the detector due to absorption of the radiation. The bolometers provide an output signal, i.e., a change in the resistance of materials (called bolometer elements), that is proportional to the temperature of the transducer region. The bolometer elements have been made from both metals and semiconductors. In metals, the resistance change is essentially due to variations in the carrier mobility, which typically decreases with temperature. Greater sensitivity can be obtained in high-resistivity semiconductor bolometer elements in which the free-carrier density is an exponential function of temperature.

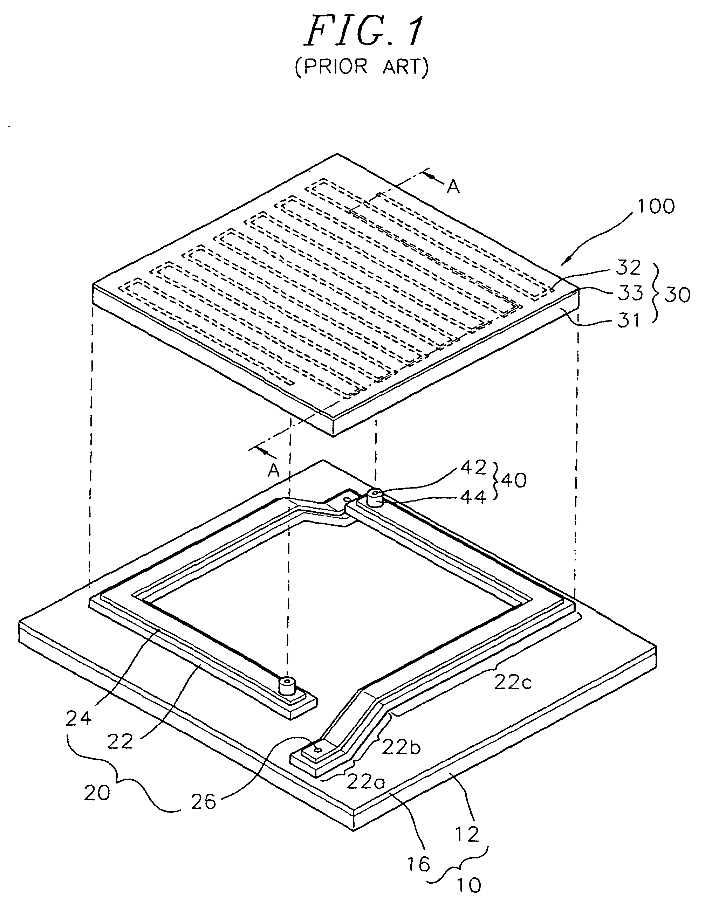

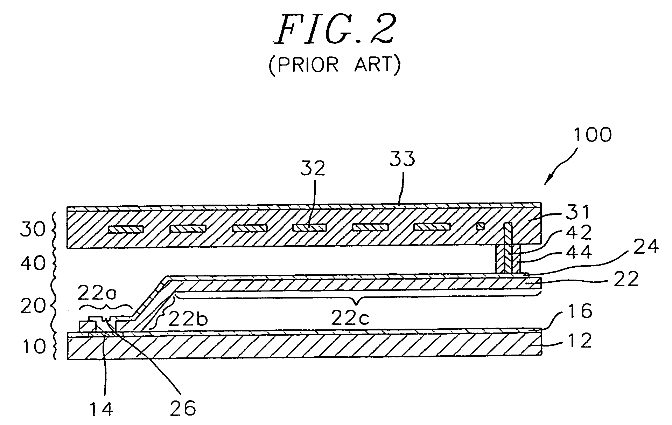

In Figs. 1 and 2, there are shown a perspective view and a cross sectional view illustrating a three-level bolometer 100, disclosed in U.S. Ser. Application No. 09/102,364 entitled "BOLOMETER HAVING AN INCREASED FILL FACTOR". The bolometer 100 comprises an active matrix level 10, a support level 20, a pair of posts 40 and an absorption level 30.

Document WO-A-0 003 214 discloses also such a bolometer.

The active matrix level 10 has a substrate 12 including an integrated circuit (not shown), a pair of connecting terminals 14 and a protective layer 16. Each of the connecting terminals 14 made of a metal is located on top of the substrate 12. The protective layer 16 made of, e.g., silicon nitride (SiNₓ), covers the substrate 12. The pair of connecting terminals 14 are electrically connected to the integrated circuit.

The support level 20 includes a pair of bridges 22 made of silicon nitride (SiNₓ), each of the bridges 22 having a conduction line 24 formed on top thereof. Each of the bridges 22 is provided with an anchor portion 22a, a leg portion 22b and an elevated portion 22c, the anchor portion 22a including a via hole 26 through which one end of the conduction line 24 is electrically connected to the connecting terminal 14, the leg portion 22b supporting the elevated portion 22c.

The absorption level 30 is provided with a bolometer element 32 surrounded by an absorber 31 and an IR absorber coating 33 formed on top of the absorber 31. The absorber 31 is fabricated by depositing silicon nitride before and after the formation of the bolometer element 32 to surround the bolometer element 32. Titanium (Ti) is chosen as the material for bolometer element 32 because of the ease with which it can be formed. Serpentine shape gives the bolometer element 32 to high resistivity.

Each of the posts 40 is placed between the absorption level 30 and the support level 20. Each of the posts 40 includes an electrical conduit 42 made of a metal, e.g., titanium (Ti), and surrounded by an insulating material 44 made of, e.g., silicon nitride (SiNₓ). Top end of the electrical conduit 42 is electrically connected to one end of the serpentine bolometer element 32 and bottom end of the electrical conduit 42 is electrically connected to the conduction line 24 on the bridge 22, in such a way that each ends of the serpentine bolometer element 32 in the absorption level 30 is electrically connected to the integrated circuit of the active matrix level 10 through the electrical conduits 42, the conduction lines 24 and the connecting terminals 14.

When exposed to infra-red radiation, the resistivity of the serpentine bolometer element 32 increases, causing a current and a voltage to vary, accordingly. The varied current or voltage is amplified by the integrated circuit, in such a way that the amplified current or voltage is read out by a detective circuit (not shown).

In the above-described infrared bolometer, the bridge of the support level is provided with a cantilevered shape to elongate the length thereof, to thereby give a decrease of thermal exchange between the active matrix level and the absorption level, but the cantilevered shape still has some problems. One of the problems of the infrared bolometer is the elastic stress presented in the bridge, which is an inherent part of the deposition process. When the elastic stress, e.g., the tensile stress, is imposed in the bridge, the elevated portion of the bridge is warped with an upward-concave curvature to release the elastic stress, while the anchor portion is affixed to the active matrix level, resulting in giving a slope to the post positioned on top of the elevated portion and making the absorber to be bent.

### DISCLOSURE OF THE INVENTION

It is, therefore, a primary object of the present invention to provide an infrared bolometer capable of structurally compensating for a slope of a post.

In accordance with one aspect of the present invention, there is provided the infra-red bolometer, which comprises all the characteristics recited in claim 1. Dependent claims define additionnal embodiments.

### BRIEF DESCRIPTION OF THE DRAWINGS

The above and other objects and features of the present invention will become apparent from the following description of the preferred embodiments given in conjunction with the accompanying drawings, wherein:
Fig. 1 shows a perspective view setting forth an infrared bolometer previous disclosed;
Fig. 2 presents a schematic cross sectional view depicting the infrared bolometer taken along A - A in Fig. 1;
Fig. 3 shows a perspective view illustrating an infrared bolometer in accordance with the present invention;
Fig. 4 provides a schematic cross sectional view setting forth the infrared bolometer taken along B - B in Fig. 3; and
Fig. 5 presents a schematic cross sectional view illustrating a bridge of the infrared bolometer when the bridge is warped.

### MODES OF CARRYING OUT THE INVENTION

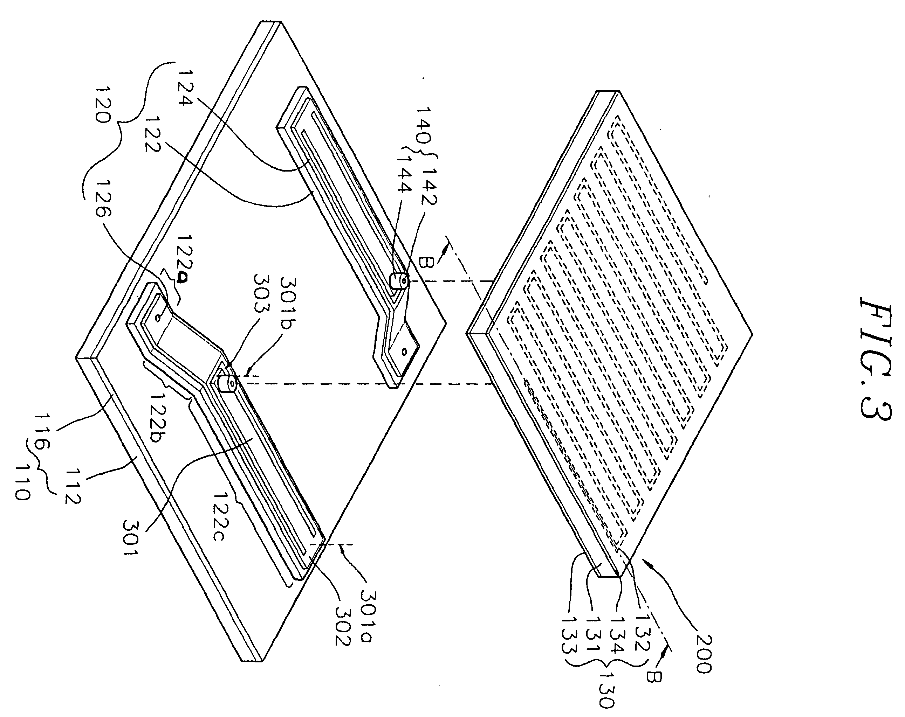

There are provided in Figs. 3, 4 and 5 a perspective view setting forth an infrared bolometer 200, a schematic cross sectional view illustrating the infrared bolometer 200, a schematic cross sectional view depicting a bridge of the infrared bolometer 200 when the bridge is warped, in accordance with the present invention, respectively. It should be noted that like parts appearing in Figs. 3, 4 and 5 are represented by like reference numerals.

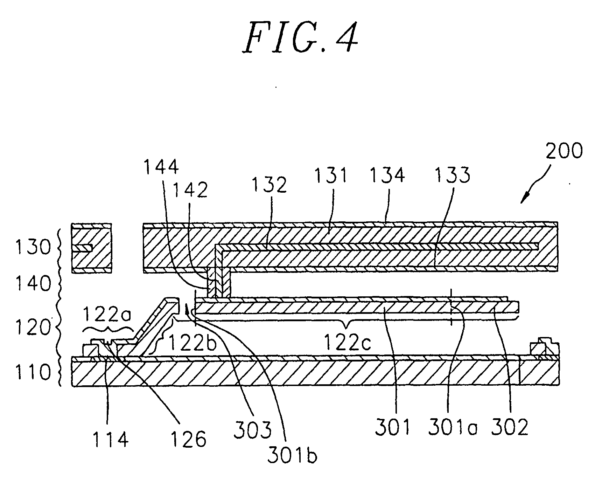

The inventive bolometer 200 shown in Figs. 3 and 4 comprises an active matrix level 110, a support level 120, a pair of posts 140 and an absorption level 130.

The active matrix level 110 has a substrate 112 including an integrated circuit (not shown), a pair of connecting terminals 114, (see also Fig. 2, (14)), and a protective layer 116. Each of the connecting terminals 114 made of a metal is located on top of the substrate 112 and is electrically connected to the integrated circuit. The protective layer 116 made of, e.g., silicon nitride (SiNₓ), covers the substrate 112 to prevent the connecting terminals 114 and the integrated circuit from damaging chemically and physically during the manufacturing of the infrared bolometer 200.

The support level 120 includes a pair of bridges 122 made of an insulating material, e.g., silicon nitride (SiNₓ), silicon oxide (SiO₂) or silicon oxy-nitride (SiOₓN_{y}), and a pair of conduction lines 124 made of a metal, e.g., titanium (Ti), wherein each of the conduction lines 124 is placed on top of the respective bridge 122. Each of the bridges 122 is provided with an anchor portion 122a, a leg portion 122b and an elevated portion 122c. The anchor portion 122a includes a via hole 126 through which one end of each of the conduction lines 124 is electrically connected to the respective connecting terminal 114. The leg portion 122b supports the elevated portion 122c. The elevated portion 122c is provided with an inner part 301 and an outer part 302, wherein one side 301a of the inner part 301 is connected to the outer part 302 and another side 301b of the inner part 301 is separated from the outer part 302 by a gap 303, thereby cantilevering the inner part 301 from the outer part 302.

The absorption level 130 is provided with a bolometer element 132 surrounded by an absorber 131, an reflective layer 133 formed at bottom of the absorber 131 and an IR absorber coating 134 positioned on top of the absorber 131. The absorber 131 made of an insulating material having an low heat-conductivity, e.g., silicon nitride (SiNₓ), silicon oxide (SiOₓ) or silicon oxy-nitride (SiOₓN_{y}) is fabricated by depositing the insulating material before and after the formation of the bolometer element 132 to surround the bolometer element 132. The bolometer element 132 is made of metal, e.g., titanium, and has a serpentine shape. The reflective layer 133 is made of a metal, e.g., Al or Pt, and is used for returning the transmitted IR back to the absorber 131. The IR absorber coating 134 is made of, e.g., black gold, and is used for reinforcing an absorption efficiency for the incident IR.

Each of the posts 140 is placed on top of the inner part 301 of the bridge 122 in the support level 120 and on bottom of the absorber 131 of the absorption level 130. Each of the posts 140 includes an electrical conduit 142 made of a metal, e.g., titanium (Ti), and surrounded by an insulating material 144 made of, e.g., silicon nitride (SiNₓ), silicon oxide (SiOₓ) or silicon oxy-nitride (SiOₓN_{y}). Top end of each of the electrical conduits 142 is electrically connected to one end of the bolometer element 132 and bottom end of the electrical conduit 142 is electrically connected to the conduction line 124 on the bridge 122, in such a way that each ends of the bolometer element 132 in the absorption level 130 is electrically connected to the integrated circuit of the active matrix level 110 through the respective electrical conduits 142, the respective conduction lines 124 and the respective connecting terminals 114.

When exposed to infrared radiation, the resistivity of the bolometer element 132 changes, causing a current and a voltage to vary, accordingly. The varied current or voltage is amplified by the integrated circuit, in such a way that the amplified current or voltage is read out by detective circuit (not shown).

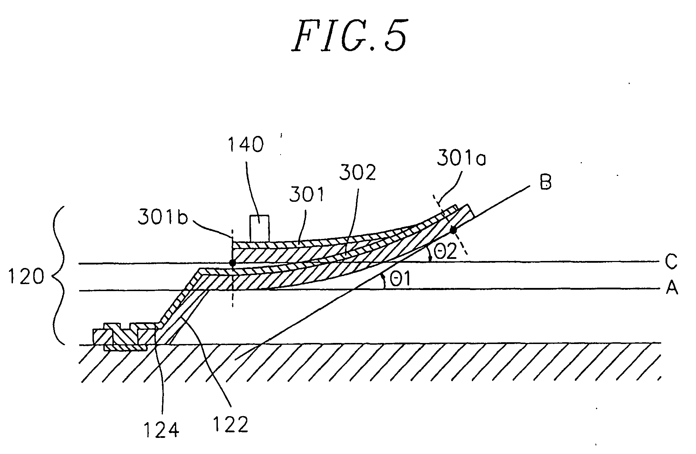

Fig. 5 provides a schematic cross sectional view illustrating a bridge 122 of the infrared bolometer 200, wherein the elastic stress presented in the bridge 122 is released into the warp thereof. The inner part 301 and the outer part 302 are warped with an upward-concave curvature with respective to the tensile stress imposed therein. One tangent line B of the curvature at the connecting side 301a of the inner part 301 has a first angle (θ1) for the horizontal line A, wherein the first angle (θ1) functions as an initial angle of the inner part 301. Another tangent line C of the curvature at the separated side 301b of the inner part 301, opposite to the connecting side 301a, has a second angle (-θ2) for the tangent line B. As the post 140 is positioned on top of the separated side 301b of the inner part 301, the slope angle (θ3) of the post 140 is a sum of the first angle (θ1) and the second angle (-θ2). However, since the length of the inner portion 301 is similar to that of the outer portion 302, the slope angle (θ3) of the post 140 goes to about zero, which will, in turn, structurally compensate the slop of the post 140 into the upright and, therefore, keep the absorber 131 from being bent.

While the present invention has been described with respect to certain preferred embodiments only, other modifications and variations may be made without departing from the scope of the present invention as set forth in the following claims.

## Claims

1. A infrared bolometer (200) comprising:
an active matrix level (110) including a substrate (112) and a pair of connecting terminals (14);
a support level (120) provided with a pair of bridges and a pair of conduction lines (124); whereby each of bridges (122) is provided with an anchor portion (122a), a leg portion (122b) and an elevated portion (122c); the anchor portion being affixed to the active matrix level and the elevated portion being apart from the active matrix level,
an absorption level (130) including a bolometer element (132) surrounded by an absorber (131);
**characterized in that**:
it comprises a pair of posts (140) wherein a post is positioned on top of the inner part of each bridge, each one of the posts including an electrical conduit (142); wherein each end of the bolometer element is electrically connected to the respective connecting terminal through the respective conduit and the respective conduction line and
the elevated portion of each of the bridges includes an inner part (301) cantilevered from an outer part (302), the inner part being separated from the outer part by a gap (303) such that when a stress is presented in one of the bridges, the inner part and the outer part have an upward-concave curvature so that the posts stay upright keeping the absorber from being bent.

2. The bolometer of claim 1, wherein one side of the inner part in each of the bridges is connected to the outer part thereof.

3. The bolometer of claim 2, wherein other sides of the inner part in each of the bridges are separated from the outer part thereof by an gap.

4. The bolometer of claim 1, wherein the absorption level further includes a reflective layer formed at bottom of the absorber.

5. The bolometer of claim 4, wherein the absorption level further includes an IR absorber coating formed on top of the absorber.

## Patentansprüche

1. Infrarotempfindliches Bolometer (200) umfassend:
ein Aktivmatrixniveau (110), aufweisend ein Substrat (112) und ein Paar Verbindungsanschlüsse (14);
ein Trägerniveau (120), das mit einem Paar Brücken und einem Paar Leitungen (124) versehen ist, wobei jede der Brücken (122) mit einem Verankerungsabschnitt (122a), einem Schenkelabschnitt (122b) und einem erhabenen Abschnitt (122c) versehen ist, wobei der Verankerungsabschnitt befestigt ist an dem Aktivmatrixniveau und der erhabene Abschnitt von dem Aktivmatrixniveau beabstandet ist;
ein Absorptionsniveau (130), das ein bolometrisches Element (132) aufweist, welches von einem Absorber (131) umgeben ist;
**dadurch gekennzeichnet, daß**
es ein Paar Stützen (140) umfaßt, wobei eine Stütze oben auf dem inneren Teil jeder Brücke positioniert ist, jede der Stützen einen elektrischen Leiter (142) aufweist, wobei jedes Ende des bolometrischen Elements elektrisch mit dem entsprechenden Verbindungsanschluß über den entsprechenden Leiter und die entsprechende Leitung verbunden ist, und der erhabene Abschnitt jeder der Brücken einen inneren Teil (301) aufweist, der gegenüber einem äußeren Teil (302) frei schwebt, der innere Teil von dem äußeren Teil über einen Spalt (303) getrennt ist, derart, daß bei Auftreten einer Belastung in einer der Brücken, der innere Teil und der äußere Teil eine nach oben konkave Krümmung haben, derart, daß die Stützen aufrecht stehen und den Absorber von einer Biegung abhalten.

2. Bolometer nach Anspruch 1, bei welchem eine Seite des inneren Teils in jeder der Brücken mit deren äußerem Teil verbunden ist.

3. Bolometer nach Anspruch 2, bei welchem andere Seiten des inneren Teils in jeder der Brücken von deren äußerem Teil über einen Spalt getrennt sind.

4. Bolometer nach Anspruch 1, bei welchem das Absorptionsniveau des weiteren eine reflektierende Schicht aufweist, die am Boden des Absorbers ausgebildet ist.

5. Bolometer nach Anspruch 4, bei welchem das Absorptionsniveau des weiteren eine IR-Strahlen absorbierende Beschichtung aufweist, die oben auf dem Absorber ausgebildet ist.

## Revendications

1. Bolomètre à infrarouge (200) comprenant :
- un niveau de matrice active (110) comprenant un substrat (112) et une paire de bornes de connexion (14) ;
- un niveau de support (120) comportant une paire de ponts et une paires de lignes conductrices (124), chacun des ponts (122) comportant une partie ancre (122a), une partie patte (122b) et une partie élevée (122c), la partie ancre étant fixée au niveau de matrice active et la partie élevée étant séparée du niveau de matrice active ; et
- un niveau d'absorption (130) comprenant un élément de bolomètre (132) entouré par un absorbeur (131) ;
**caractérisé en ce qu'**il comprend une paire de montants (140), un montant étant placé sur le dessus de la partie interne de chaque pont, chacun des montants comprenant un conduit électrique (142), chaque extrémité de l'élément de bolomètre étant connectée électriquement à la borne de connexion respective par le biais du conduit respectif et de la ligne conductrice respective, tandis que la partie élevée de chacun des ponts comprend une partie interne (301) décalée par rapport à une partie externe (302), la partie interne étant séparée de la partie externe par un espace (303) de sorte que, lorsqu'une contrainte s'exerce dans l'un des ponts, la partie interne et la partie externe présentent une courbure concave vers le haut de manière que les montants restent droits, empêchant l'absorbeur d'être courbé.

2. Bolomètre selon la revendication 1, dans lequel un côté de la partie interne dans chacun des ponts est connecté à la partie externe de ceux-ci.

3. Bolomètre selon la revendication 2, dans lequel les autres côtés de la partie interne de chacun des ponts sont séparés de leur partie externe par un espace.

4. Bolomètre selon la revendication 1, dans lequel le niveau d'absorption comprend en outre une couche réfléchissante formée au niveau du fond de l'absorbeur.

5. Bolomètre selon la revendication 4, dans lequel le niveau d'absorption comprend en outre un revêtement d'absorption IR formé sur le dessus de l'absorbeur.
